# EUROPÄISCHE PATENTANMELDUNG

(11) **EP 4 015 077 A1**
(43) Veröffentlichungstag der Anmeldung: **22.06.2022**
(21) Anmeldenummer: 20214190.9
(22) Anmeldetag: 15.12.2020
(51) Int. Cl.: B01J 23/26, B01J 31/20, B01J 31/22, B01J 31/18

(54) **VERFAHREN ZUR CARBONYLIERUNG VON EPOXIDEN**

(71) Anmelder: Covestro Deutschland AG, 51373 Leverkusen (DE)
(72) Erfinder: Langanke, Jens, 53894 Mechernich (DE); Gürtler, Christoph, 50735 Köln (DE); Leven, Matthias, 51069 Köln (DE); Schikowski, Daniel, 52070 Aachen (DE); Leitner, Walter, 52074 Aachen (DE); Raju, Suresh, 52072 Aachen (DE)
(74) Vertreter: Levpat

(57) **Zusammenfassung**

Gegenstand der Erfindung ist ein Verfahren zur Carbonylierung von Epoxiden in Gegenwart von Katalysator-Systemen, wobei die Carbonylierung in Gegenwart von Kohlenmonoxid erfolgt, und wobei das Katalysatorsystem eine Vanadium-basierte, Chrom-basierte, Mangan-basierte und/oder Wolfram-basierte Verbindung bevorzugt Wolfram-basierte Verbindung enthält. Ein weiterer Erfindungsgegenstand sind Carbonylierungsprodukte sowie Carbonylierungsfolgeprodukte und die Verwendung erfindungsgemäßer Katalysator-Systeme zur Carbonylierung von Epoxiden.

## Beschreibung

Gegenstand der Erfindung ist ein Verfahren zur Carbonylierung von Epoxiden in Gegenwart von Katalysator-Systemen, wobei die Carbonylierung in Gegenwart von Kohlenmonoxid erfolgt, und wobei das Katalysatorsystem eine Vanadium-basierte, Chrom-basierte, Mangan-basierte und/oder Wolfram-basierte Verbindung bevorzugt Wolfram-basierte Verbindung enthält. Ein weiterer Erfindungsgegenstand sind Carbonylierungsprodukte sowie Carbonylierungsfolgeprodukte und die Verwendung erfindungsgemäßer Katalysator-Systeme zur Carbonylierung von Epoxiden.

In DE 10235316 A1 wird ein Verfahren zur Herstellung von Lactonen durch katalytische Carbonylierung von Oxiranen offenbart, wobei ein Katalysatorsystem aus a) mindestens einem Carbonylierungskatalysator A aus neutralen oder anionischen Übergangsmetallkomplexen von Metallen der Gruppen 5 bis 11 des Periodensystems der Elemente und b) mindestens einer chiralen Lewis-Säure B als Katalysator eingesetzt wird, mit Ausnahme von [(salph)Al(THF)2][Co(CO)4]. In WO 2006/058681 A2 wird ein Verfahren zur Herstellung von enantiomerenangereicherten Lactonen durch katalytische Carbonylierung von Lactonen zu Anhydriden in Anwesenheit eines neutralen oder anionischen Übergangsmetall-Komplexen beschrieben.

In WO 2016/015019 A1 wird eine Methode zur Darstellung von Aluminium-Komplexen, mit dem Nutzen die Carbonylierung von Epoxiden zu katalysieren, beschrieben.

In JP2013173090 wird die Carbonylierung von Epoxiden unter Verwendung immobilisierter Katalysatorsysteme beschrieben.

In WO 2011/163309 A2 wird ein zweistufiges Verfahren zur Herstellung von Polyhydroxybutyrat- und/oder Polyhydroxypropionat-Homopolymeren mit anschließender thermischer Zersetzung zu ungesättigten Säuren wie Crotonsäure und/oder Acrylsäure beschrieben. In der ersten Stufe werden durch die Carbonylierung von Epoxiden die entsprechenden beta-Lactone hergestellt und in der zweiten Stufe zu den entsprechenden Homopolymeren umgesetzt.

Die US-Bundesbehörde OSHA schreibt einen Zeitgewichteten Durchschnittswert für Arbeitsplatzgrenzwerte von ≤ 0,1 ppm für Cobaltcarbonyle und Cobalthydrocarbonyle vor (vgl. Clinical Toxicology, 1999, 37, 201-216), wohingegen Durchschnittswert für Expositionsgrenzwerte für Carbonylverbindungen der Metalle Vanadium, Chrom, Mangan und Wolfram in der Regel höher liegen.

Die Weltproduktion an Cobalt lag 2016 bei 123.000 Tonnen (laut Department of Natural Resources, Canada). Wohingegen die jährliche Weltproduktion an Vanadium, Chrom, Mangan und Wolfram je in der Größenordnung von Millionen Tonnen liegt.

Ausgehend vom Stand der Technik war es Aufgabe der vorliegenden Erfindung die Nachteile von Cobalt-basierten Katalysatoren für die Carbonylierung von Epoxiden abzuhelfen.

Es war daher Aufgabe der vorliegenden Erfindung, ein vereinfachtes Verfahren für die Carbonylierung von Epoxiden zu Carbonylierungsprodukten unter Einsatz eines Katalysatorsystems bereitzustellen, wobei im Speziellen *beta*-Lactone, cyclische Esteretherverbindungen und als deren Folgeprodukte Polyhydroxyalkanoat-(Co)polymere, insbesondere Polyhydroxybutyrat- und/oder Polyhydroxypropionat-(Co)polymeren, durch eines direktes und einstufiges Verfahren bereitgestellt werden sollen.

Hierbei soll ein chemisch stabileres Katalysatorsystem verwendet werden, so dass eine längere Lagerung und/oder eine technisch einfachere Lagerung, Handling und Nutzung gegenüber aus dem Stand der Technik vorbeschriebenen Cobalt-basierten Systemen möglich ist. In den im Stand der Technik vorbeschriebenen Cobalt-basierten Systemen liegt Cobalt in der sehr empfindlichen Oxidationsstufe -1 vor und kann äußerst leicht mit Oxidanzien aller Art sowie Hydroxyverbindungen oder Wasser degradiert werden. Daneben sollen sich die erfindungsgemäßen Katalysatorsysteme durch eine bessere technische Verfügbarkeit und eine geringere Toxizität gegenüber den Cobalt-basierten Systemen auszeichnen, wobei auch eine direkte Weiterverarbeitung der Carbonylierungsprdukte zu Carbonylierungsfolgeprodukten, beispielsweise der Umsetzung zu Polyurethanen ohne vorherige Abtrennung des Katalysatorsystems möglich ist.

Überraschend wurde gefunden, dass die erfindungsgemäße Aufgabe gelöst wird durch ein Verfahren zur Carbonylierung von Epoxiden in Gegenwart von Katalysator-Systemen, wobei die Carbonylierung in Gegenwart von Kohlenmonoxid erfolgt, dadurch gekennzeichnet, dass das Katalysatorsystem eine Vanadium-basiert, Chrom-basierte, Mangan-basierte und/oder Wolfram-basierte Verbindung bevorzugt Wolfram-basierte Verbindung enthält.

In einer Ausführungsform des erfindungsgemäßen Verfahren wird die Vanadium-basierte, Chrom-basierte, Mangan-basierte und/oder Wolfram-basierte Verbindung bevorzugt Wolfram-basierte Verbindung in Mengen von 0,0001 mol-% bis 20 mol-% bezogen auf die Stoffmenge an Epoxid verwendet.

In einer Ausführungsform des erfindungsgemäßen Verfahrens weist das Vanadium in der Vanadium-basierten Verbindung eine Oxidationsstufe von minus eins (-1), das Chrom in der Chrom-basierten Verbindung eine Oxidationsstufe von null (0), das Mangan in der Mangan-basierten Verbindung eine Oxidationsstufe von null (0) und plus eins (+1) und/oder das Wolfram in der Wolfram-basierten Verbindung eine Oxidationsstufe von null (0) und minus eins (-1) bevorzugt das Wolfram in der Wolfram-basierten Verbindung eine Oxidationsstufe von null (0) und minus eins (-1) eine Oxidationsstufe auf.

In einer Ausführungsform des erfindungsgemäßen Verfahrens ist die die Vanadium-basierte, Chrom-basierte, Mangan-basierte und/oder Wolfram-basierte Verbindung bevorzugt Wolfram-basierte Verbindung anionisch.

In einer Ausführungsform des erfindungsgemäßen Verfahrens enthält die Vanadium-basierte, Chrom-basierte, Mangan-basierte und/oder Wolfram-basierte Verbindung bevorzugt Wolfram-basierte Verbindung ein oder mehrere Carbonyl-Liganden, bevorzugt ein bis sechs, besonders bevorzugt zwei bis fünf.

In einer Ausführungsform des erfindungsgemäßen Verfahrens weist die Vanadium-basierte, Chrom-basierte, Mangan-basierte und/oder Wolfram-basierte Verbindung bevorzugt Wolfram-basierte Verbindung einen weiteren Liganden (L) ungleich des Carbonyl-Liganden auf, wobei folgender funktioneller Zusammenhang zwischen dem Carbonyl-Liganden und dem weiteren Liganden (L) der einkernigen Vanadium-basierten, Chrom-basierten und Wolfram-basierten Verbindung und der zweikernigen Mangan-basierten Verbindung resultiert:

M(1)(CO)₆₋ₓLₓ

Mit M(1) = V, Cr, W bevorzugt W

M(2)₂(CO)₁₀₋ₓLₓ

Mit M(2) = Mn

In einer Ausführungsform erfindungsgemäßen Verfahrens ist der Ligand (L) eine oder mehrere Verbindung(en) und wird ausgewählt aus der Gruppe bestehend aus Hydrido, wie beispielsweise (H),Halogenid, wie beispielsweise F, Cl, Br und I, Pseudohalogenid, wie z.besipielsweise CN, N₃, OCN, NCO, CNO, SCN, NCS und SeCN, anorganischen N-Liganden, wie beispielsweise NC, NO, NO₂, NO₃, NH₂, NCH₃, NCCH₃ und NCCF₃, Pseudochalkogenide, Carboxylate, wie beispielsweise OTf, OAc und HCOO, sonstige anorganische Anionen, wie beispielsweise OH und HSO₄, Allylverbindungen wie beispielsweise η³-C₃H₅, Diene, wie beispielsweise Butadiene (C₄C₆), cyclische C5-Liganden, wie beispielsweise Cyclopentadienyl (Cp, η⁵-C₅H₅) und Pentamethylcyclopentadienyl (Cp^{∗}, η⁵-C₅Me₅), Alkylverbindungen, Arylverbindungen, Fischer-Carbene, wie beispielsweise C(Ph)(Ph) (als Fischer-Carben), C(OMe)(Ph) (als Fischer-Carben), C(OEt)(NHPh) (als Fischer-Carben), NHC-Carbene, wie beispielsweise 1,3-Dimesitylimidazol-2-ylidene (IMes, NHC-Carben) und 1,3-Bis(2,4,6-trimethylphenyl)-4,5-dihydroimidazol-2-ylidene (SIMes, NHC-Carben), Amine, wie beispielsweise NH₃, Ethylendiamin (eda), Diethylentriamin, Anilin, Pyridin, 2,2'-Bipyridin (bipy) und Terpyridin, Imine, Aminophosphine, wie beispielsweise PNP, PDI und PBP, Phosphine, wie beispielsweise PPh₃, PMe₃, PEt₃, PBu₃, PH₃, P(OMe)₃ und P(OEt)₃, Phosphite, PEP-Pinzetten-Liganden mit E = B und N sowie Ether, wie beispielsweise Diethylether, THF und 2-Me-THF.

In einer bevorzugten Ausführungsform erfindungsgemäßen Verfahrens ist der Ligand (L) eine oder mehrere Verbindung(en) und wird ausgewählt aus der Gruppe bestehend aus H, F, Cl, Br, I, CN, NC, SCN, N₃, NO₂, NO₃, NH₂, OTf, OAc, OH, HSO₄, η³-C₃H₅, Butadiene (C₄C₆), Cyclopentadienyl (Cp, η⁵-C₅H₅), Pentamethylcyclopentadienyl (Cp^{∗}, η⁵-C₅Me₅), C(Ph)(Ph) (als Fischer-Carben), C(OMe)(Ph) (als Fischer-Carben), C(OEt)(NHPh) (als Fischer-Carben), 1,3-Dimesitylimidazol-2-ylidene (IMes, NHC-Carben), 1,3-Bis(2,4,6-trimethylphenyl)-4,5-dihydroimidazol-2-ylidene (SIMes, NHC-Carben), NH₃, Ethylendiamin (eda), Diethylentriamin, Tetramethylethylendiamin, Anilin, Pyridin, 2,2'-Bipyridin (bipy), PPh₃, PMe₃, PEt₃, PBu₃, PH₃, P(OMe)₃, P(OEt)₃, Diethylether, THF und 2-Me-THF, bevorzugt H, F, Cl, Br, I, CN, NC, SCN, N₃, NO₂, NO₃, NH₂, OTf, OAc, η³-C₃H₅, Butadiene (C₄C₆), Cyclopentadienyl (Cp, η⁵-C₅H₅), Pentamethylcyclopentadienyl (Cp*, η⁵-C₅Me₅), C(Ph)(Ph) (als Fischer-Carben), C(OMe)(Ph) (als Fischer-Carben), C(OEt)(NHPh) (als Fischer-Carben), 1,3-Dimesitylimidazol-2-ylidene (IMes, NHC-Carben), 1,3-Bis(2,4,6-trimethylphenyl)-4,5-dihydroimidazol-2-ylidene (SIMes, NHC-Carben), Ethylendiamin (eda), Diethylentriamin, Tetramethylethylendiamin, Anilin, Pyridin, 2,2'-Bipyridin (bipy), PPh₃ und PMe₃, besonders bevorzugt H, F, Cl, Br, I, CN, NC, SCN, N₃, OTf, Cyclopentadienyl (Cp, η⁵-C₅H₅), Pentamethylcyclopentadienyl (Cp*, η⁵-C₅Me₅), C(Ph)(Ph) (als Fischer-Carben), C(OMe)(Ph) (als Fischer-Carben), C(OEt)(NHPh) (als Fischer-Carben), 1,3-Dimesitylimidazol-2-ylidene (IMes, NHC-Carben) und 1,3-Bis(2,4,6-trimethylphenyl)-4,5-dihydroimidazol-2-ylidene (SIMes, NHC-Carben), ganz besonders bevorzugt Cl, Br, I, Ethylendiamin (eda), 2,2'-Bipyridin (bipy), Cyclopentadienyl (Cp, η⁵-C₅H₅) und Pentamethylcyclopentadienyl (Cp*, η⁵-C₅Me₅).

In einer Ausführungsform des erfindungsgemäßen Verfahrens enthält das Katalysatorsystem eine zusätzliche Lewis Säure.

Lewis Säuren enthalten als Lewis-saures Zentrum ein oder mehrere koordinativ ungesättigte Metallatome, wie z.B. Aluminium, Zinn, Zink, Bismut, Vanadium, Chrom, Molybdän, Wolfram, Eisen, Kobalt, Nickel, Rhodium, Iridium, Palladium, Platin, Kupfer oder Zink. Aber auch das Halbmetall Bor bildet das Lewis-saure Zentrum von Lewis-Säuren. Koordinativ ungesättigte Lewis-saure Zentren zeichnet sich dadurch aus, dass nukleophile Moleküle daran binden können. Koordinativ ungesättigte Lewis-saure Zentren kann bereits in der als Katalysator eingesetzten Verbindung vorhanden sein oder bildet sich in der Reaktionsmischung, z.B. durch Abspaltung eines schwach gebundenen nukleophilen Moleküls.

In einer weiteren Ausführungsform des erfindungsgemäßen Verfahrens kann die Synthese der Katalysator-Systeme auch im Reaktionsgemisch selbst und/oder unter Reaktionsbedingungen erfolgen. Diese Vorgehensweise wird als zur *in-situ* Generierung eines Katalysator-Systems bezeichnet.

In einer Ausführungsform des erfindungsgemäßen Verfahrens ist die Lewis-Säure kationisch oder ladungsneutral, bevorzugt kationisch.

In einer bevorzugten Ausführungsform des erfindungsgemäßen Verfahrens ist die Lewis-Säure kationisch.

Die Lewis Säuren können einfache anorganische, metallorganisch oder organische Verbindungen sein, wie z.B. BF₃, AlCl₃, FeCl₃ B(CH₃)₃, B(OH)₃, BPh₃, B(OR)₃, SiCl₄, SiF₄, PF₄, CO₂, SO₃ usw. sowie Addukte dieser Verbindungen. Aber auch komplexer aufgebaute Lewis Säuren, in denen das Lewis-saure Zentrum durch Komplex-Liganden koordiniert wird, sind bekannt und kommen in einer Ausführungsform des erfindungsgemäßen Verfahrens bevorzugt zum Einsatz. Die Liganden haben dabei insbesondere die Rolle durch eine partielle koordinative Absättigung des Lewis-sauren Zentrums bzw. der Lewis-sauren Zentren eine stabilisierende und/oder verstärkende Wirkung auf die Lewis-sauren Zentren haben. Dabei kann zwischen elektronischen und sterischen Effekten der Liganden-Moleküle unterschieden werden. Quadratisch und tetraedrische Koordinationspolyeder zwischen N- und/oder O-Ligand(en) und Lewis-sauren Zentren sind dafür besonders geeignet.

Das Katalysatorsystem mit kationischer Lewis-Säure lässt sich formal wir folgt darstellen

[M'(CO)_{6-zx}L_{x,z}]¹⁻[ML'ₘ]ⁿ⁺ₒ

Wobei L' gleich Ligand der Lewis-Säure ist und o die Anzahl der Lewis-Säuren des Gesamtionenpaares ist. Weiterhin wird die Zähnigkeit der Liganden in der Formelschreibweise mit dem Index z angegeben, ihre Anzahl mit dem Index x.

In einer Ausführungsform des erfindungsgemäßen Verfahrens ist die kationische Lewis-Säure ein unsubstituiertes Dicyclopentadienyl-Metall-Kation, ein substituiertes Dicyclopentadienyl-Metall-Kation, ein unsubstituiertes Metall-Porphyrin-Kation, ein substituiertes Metall-Porphyrin-Kation, ein unsubstituiertes Metall-Salen-Kation, ein substituiertes Metall-Salen-Kation, ein unsubstituiertes Metall-Salphen-Kation und/oder ein und substituiertes Metall-Salphen-Kation.

Cyclopentadienyl-Metall-Komplexe, Lewis Säuren auf Basis von unsubstituierten und substituierten Porphyrin, Chlorin und Corrin-Komplexen, Lewis Säuren auf Basis von unsubstituierten und substituierten Salen, Salpn, Salan, Salalen, Salph, Salphen und Salqu-Komplexen, Lewis Säuren auf Basis von von unsubstituierten und substituierten Pinzetten-Komplexen, Lewis Säuren auf Basis von von unsubstituierten und substituierten Pinzetten-Diiminopyridin Komplexe sind in einer Ausführungsform des erfindungsgemäßen Verfahrens als Lewis Säure besonders bevorzugt.

Cyclopentadienyl-Metall-Komplexe, welche Komplexe zwischen einem oder mehreren Metallen und einem oder mehreren Cyclopentadienyl-Derivat-Liganden (C₅R₅⁻) sind, sind dadurch gekennzeichnet das so genannte η⁵ Metall-Lagnd-Bindungen vorliegen. In einer Ausführungsform des erfindungsgemäßen Verfahrens sind Cyclopentadienyl-Metall-Komplexe (Cp-Komplexe), Pentamethylcyclopentadienyl-Metall-Komplexe (Cp*-Komplexe), Dicyclopentadienyl-Metall-Komplexe ((Cp)2-Komplexe) und Di-Pentamethyl-cyclopentadienyl-Metall-Komplexe ((Cp*)2-Komplexe) als Lewis Säuren geeignet. Neben diesen unsubstituierten Cp-Ringen und Cp*-Ring-Systemen sind aber auch alle anderen erdenklichen Substitutionsmuster möglich. In einer Ausführungsform des erfindungsgemäßen Verfahrens ist der Dicyclopentadienyl-Metall Komplex gleich [Cp₂Ti]+ und/oder [Cp₂Ti(L')₂]⁺ mit L' = THF, Et₂O, PO und/oder EO.

Lewis Säuren auf Basis von unsubstituierten und substituierten Porphyrin, Chlorin und Corrin-Komplexen mit dem Lewis-sauren Zentrum ausgewählt aus der Gruppen von Aluminium, Zinn, Zink, Bismut, Vanadium, Chrom, Molybdän, Mangan, Wolfram, Eisen, Kobalt, Nickel, Rhodium, Iridium, Indium, Cer, Lanthan, Yttrium, Gadolinium, Palladium, Platin, Kupfer und Zink. Alle denkbaren Substitutionsmuster sind möglich. In einer Ausführungsform des erfindungsgemäßen Verfahrens sind die Substituenten unabhängig voneinander ausgewählt aus der Gruppe von Wasserstoff (-H), Methyl, tert. Butyl, Methoxy, Phenyl, 4-Methylphenyl, 4-Methoxyphenyl, 4-Chlorphenyl, 4-Bromphenyl, 4-Carboxylphenyl, 3,5-Dimethoxyphenyl, 2-Pyridyl, 4-Pyridyl und N-Methyl-4-pyridyl, bevorzugt tert. Butyl, Methoxy, Phenyl, 4-Methylphenyl, 4-Methoxyphenyl, 4-Chlorphenyl oder 3,5-Dimethoxyphenyl, ganz besonders bevorzugt Phenyl.

Lewis Säuren auf Basis von unsubstituierten und substituierten Salen, Salpn, Salan, Salalen, Salph, Salphen und Salqu-Komplexen mit dem Lewis-sauren Zentrum ausgewählt aus der Gruppen von Aluminium, Zinn, Zink, Bismut, Vanadium, Chrom, Molybdän, Mangan, Wolfram, Eisen, Kobalt, Nickel, Rhodium, Iridium, Indium, Cer, Lanthan, Yttrium, Gadolinium, Palladium, Platin, Kupfer und Zink. Alle denkbaren Substitutionsmuster sind möglich. In einer Ausführungsform des erfindungsgemäßen Verfahrens sind die Substituenten unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt ausgewählt aus der Gruppe von Wasserstoff (-H), Methyl oder tert. Butyl, ganz besonders bevorzugt tert. Butyl.

Lewis Säuren auf Basis von von unsubstituierten und substituierten Pinzetten-Komplexen (engl. pincers complexes) mit dem Lewis-sauren Zentrum ausgewählt aus der Gruppen von Aluminium, Zinn, Zink, Bismut, Vanadium, Chrom, Molybdän, Mangan, Wolfram, Eisen, Kobalt, Nickel, Ruthenium, Rhodium, Iridium, Indium, Cer, Lanthan, Yttrium, Gadolinium, Palladium, Platin, Kupfer und Zink. In einer Ausführungsform des erfindungsgemäßen Verfahrens weisen die Liganden dieser Pinzetten-Komplexe die allgemeinen Form A-(organischer Linker)-E-(organischer Linker)-A, wobei A ausgewählt aus der Gruppe der Elemente P, N und S ist und wobei E ausgewählt aus der Gruppe der Elemente C, B und N ist, und sind tridentat.

Lewis Säuren auf Basis von von unsubstituierten und substituierten Pinzetten-Diiminopyridin Komplexe (kurz: DIP-Komplexe) mit dem Lewis-sauren Zentrum ausgewählt aus der Gruppen von Aluminium, Zinn, Zink, Bismut, Vanadium, Chrom, Molybdän, Mangan, Wolfram, Eisen, Kobalt, Nickel, Ruthenium, Rhodium, Iridium, Indium, Cer, Lanthan, Yttrium, Gadolinium, Palladium, Platin, Kupfer und Zink. In einer Ausführungsform des erfindungsgemäßen Verfahrens weisen die Liganden dieser DIP-Komplexe die Form von Diiminopyridin und dessen Derivate auf.

In einer Ausführungsform des erfindungsgemäßen Verfahrens weist das Katalysatorsystem die Struktur (I), (II), (III), (IV), (V), und/oder (VI) auf: 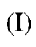 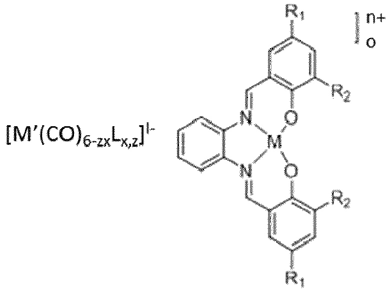
mit L = H, F, Cl, Br, I, CN, NC, SCN, NCS, CP, N₃, NO₂, NO₃, NH₂, OTf, OH, HSO₄,eda oder bipy bevorzugt H, F, Cl, Br, I, CN, N₃, OTf, eda oder bipy ganz besonders bevorzugt Cl, Br, eda oder bipy;
mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R₁ und R₂ unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt R₁ gleich R₂ ausgewählt aus der Gruppe von Wasserstoff (-H), Methyl oder tert. Butyl, ganz besonders bevorzugt tert. Butyl;

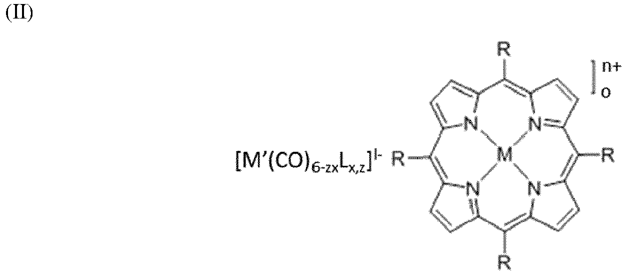

mit L = H, F, Cl, Br, I, CN, NC, SCN, NCS, CP, N₃, NO₂, NO₃, NH₂, OTf, OH, HSO₄,eda oder bipy bevorzugt H, F, Cl, Br, I, CN, N₃, OTf, eda oder bipy ganz besonders bevorzugt Cl, Br, eda oder bipy;
mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R ausgewählt aus der Gruppe von Wasserstoff (-H), Methyl, tert. Butyl, Methoxy, Phenyl, 4-Methylphenyl, 4-Methoxyphenyl, 4-Chlorphenyl, 4-Bromphenyl, 4-Carboxylphenyl, 3,5-Dimethoxyphenyl, 2-Pyridyl, 4-Pyridyl und N-Methyl-4-pyridyl, bevorzugt tert. Butyl, Methoxy, Phenyl, 4-Methylphenyl, 4-Methoxyphenyl, 4-Chlorphenyl oder 3,5-Dimethoxyphenyl, ganz besonders bevorzugt Phenyl.

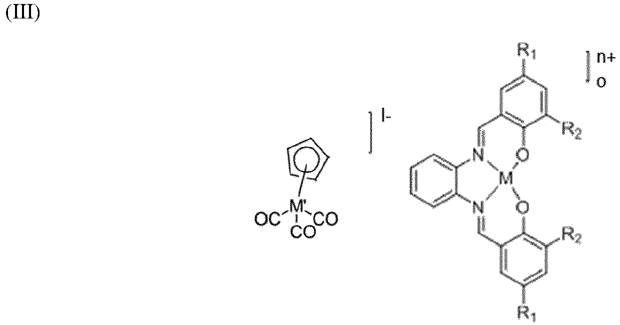

mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R₁ und R₂ unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt R₁ gleich R₂ ausgewählt aus der Gruppe von Wasserstoff (-H), Methyl oder tert. Butyl, ganz besonders bevorzugt tert. Butyl;

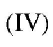

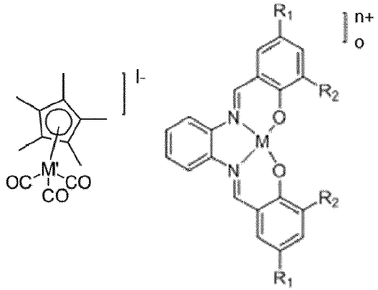

mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R₁ und R₂ unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt R₁ gleich R₂ ausgewählt aus der Gruppe von Wasserstoff (-H), Methyl oder tert. Butyl, ganz besonders bevorzugt tert. Butyl;

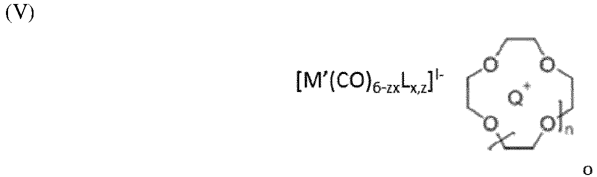

mit L = H, F, Cl, Br, I, CN, NC, SCN, NCS, CP, N₃, NO₂, NO₃, NH₂, OTf, OH, HSO₄, eda oder bipy bevorzugt H, F, Cl, Br, I, CN, N₃, OTf, eda oder bipy ganz besonders bevorzugt Cl, Br, eda oder bipy;
mit Q = Li, Na, K, Rb, Cs, Cu oder Ag, bevorzugt Li, Na, K oder Rb, ganz besonders bevorzugt K;
mit M' = V, Cr, Mn oder W bevorzugt W;
mit n = 1-5, bevorzugt 2-5, ganz besonders bevorzugt 3;
und/oder 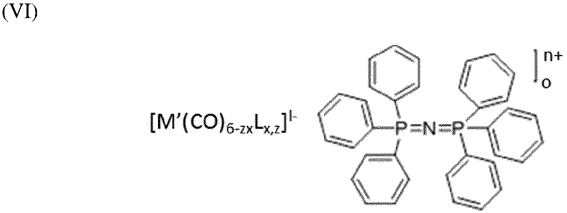
mit L = H, F, Cl, Br, I, CN, NC, SCN, NCS, CP, N₃, NO₂, NO₃, NH₂, OTf, OH, HSO₄, eda oder bipy bevorzugt H, F, Cl, Br, I, CN, N₃, OTf, eda oder bipy ganz besonders bevorzugt Cl, Br, eda oder bipy;
mit M' = V, Cr, Mn oder W bevorzugt W.

In einer bevorzugten Ausführungsform des erfindungsgemäßen Verfahrens weist das Katalysatorsystem die Struktur (VII), (VIII), (IX), (X), (XI), (XII), (XIII) und/oder (XIV) auf:

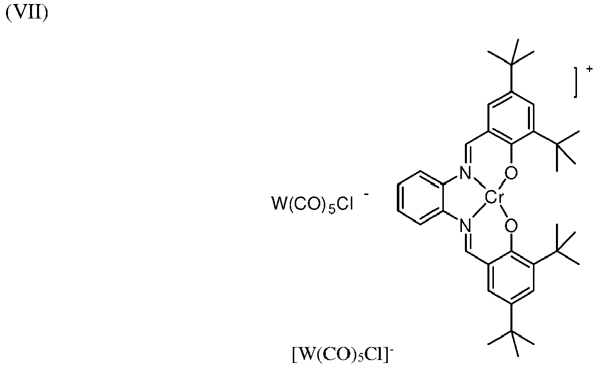

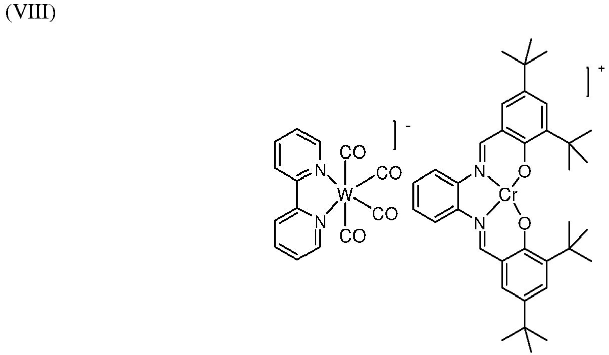

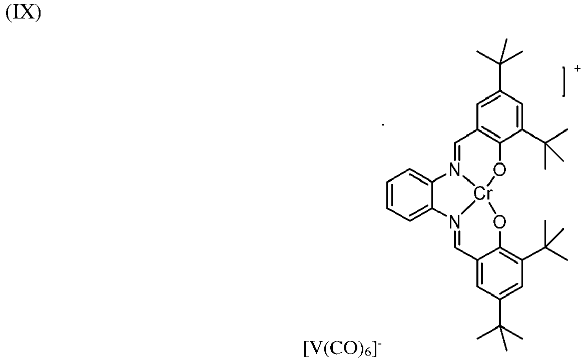

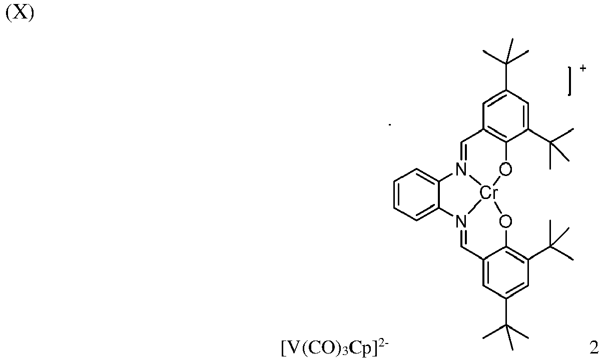

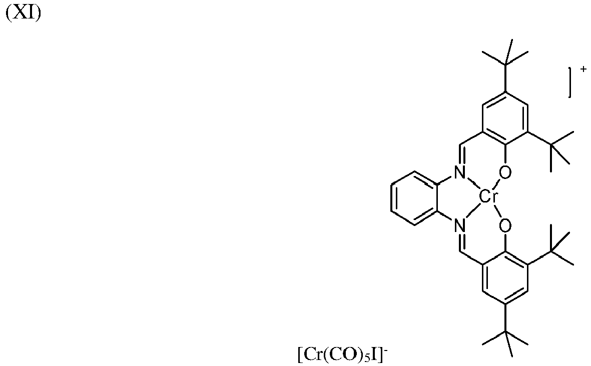

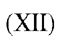

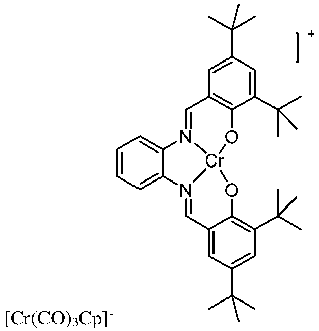

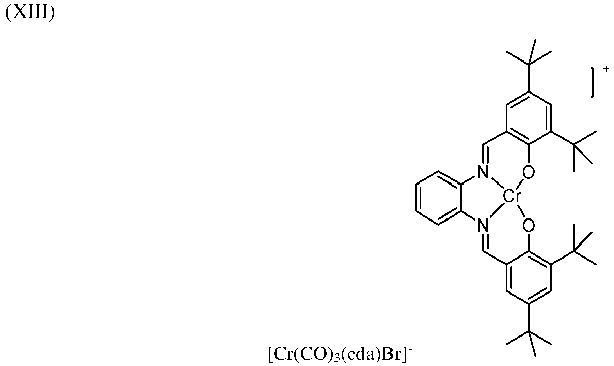

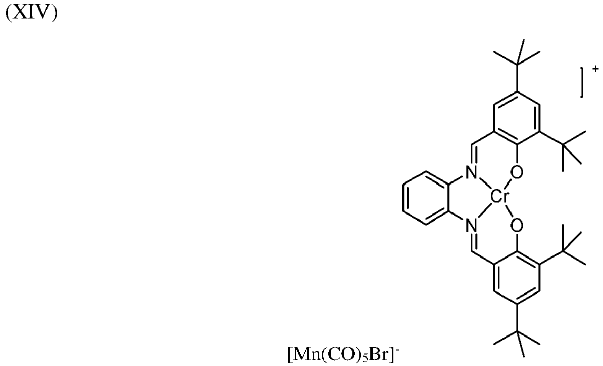

In einer besonders bevorzugten Ausführungsform des erfindungsgemäßen Verfahrens weist das Katalysatorsystem die Struktur (VII) und/oder (VIII) und ganz besonders bevorzugt die Struktur (VII) auf.

Das erfindungsgemäße Epoxid kann ein Epoxid mit 2-45 Kohlenstoffatomen sein. In einer bevorzugten Ausführungsform des Verfahrens wird das Epoxid ausgewählt aus mindestens einer Verbindung der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, Allylglycidylether, Vinylcyclohexenoxid, Cyclooctadienmonoepoxid, Cyclododecatrienmono-epoxid, Butadienmonoepoxid, Isoprenmonoepoxid, Limonenoxid, 1,4-Divinylbenzolmonoepoxid, 1,3-Divinylbenzolmonoepoxid, Glycidylacrylat Benzoloxid, Nahthalenoxid und Glycidylmethacrylat ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether.

In einer besonders bevorzugten Ausführungsform des Verfahrens ist das Epoxid Ethylenoxid und/oder Propylenoxid.

In einer Ausführungsform des erfindungsgemäßen Verfahrens wird das Carbonylierungsverfahren Gegenwart eines Suspensionsmittels, bevorzugt eines ein aprotischen Suspensionsmittel durchgeführt.

Die erfindungsgemäß eingesetzten Suspensionsmittel enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Methylformiat, Ethylformiat, Isopropylformiat, Propylformiat, Ethylacetat, Isopropylacetat, n-Butylacetat, Oxalsäuremethylester, 2,2-Diemthoxypropan, Aceton, Methylethylketon, Acetonitril, Benzonitril, Diethylcarbonat, Diemethylcarbonat, Nitromethan, Dimethylsulfoxid, Sulfolan, Dimethylformamid, Dimethylacetamid und *N*-Methylpyrrolidon.

Zu der Gruppe der unpolar- und schwach polar-aprotischen Lösungsmittel zählen z.B. Ether, wie z.B. Dioxolan, Dioxan, Diethylether, Methyl-tert-Butylether, Ethyl-tert-Butylether, tert-Amylmethylether, Butylmethylether, Methylpropylether, Dimethylether, Diisopropylether, Ethylmethylether, Methylphenylether, Dimethoxymethan, Diethoxymethan, Diemethoxyethan (Glyme), [12]Krone-4, Cyclopentylmethylether, Triglyme, Tetraglyme, Diethylenglycoldibutylether, 2-Methyltetrahydrofuran und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol, Fluorbenzol, Difluorbenzol, Methylenechlorid, und Tetrachlorkohlenstoff. Bevorzugt als Suspensionsmittel werden 4-Methyl-2-oxo-1,3-dioxolan, 1,3-Dioxolan-2-on, 2-Methyltetrahydrofuran, Tetrahydrofuran, Dioxane, Diemethoxyethan (Glyme), Diethylether, Ethylacetat, Methylethylketon, *N*-Methylpyrrolidon, Acetonitril, Sulfolan, Dimethylsulfoxid, Dimethylformamid, Toluol, Xylol, Ethylbenzol, Dichlorbenzol, Fluorbenzol, Chlorbenzol und Difluorbenzol sowie Mischungen zweier oder mehrerer dieser Suspensionsmittel eingesetzt, besonders bevorzugt ist 4-Methyl-2-oxo-1,3-dioxolan, 1,3-Dioxolan-2-on, 2-Methyltetrahydrofuran, Tetrahydrofuran, Diemethoxyethan (Glyme), Diethylether, Ethylacetat, Acetonitril, Toluol, Dichlorbenzol, Fluorbenzol, Chlorbenzol und Difluorbenzol sowie Mischungen zweier oder mehrerer dieser Suspensionsmittel.

In einer Ausführungsform erfindungsgemäßen Verfahrens wird das Verfahren bei einem CO-Partialdruck von 60 bis 130 bara bevorzugt von 70 bis 120 bara und besonders bevorzugt von 100 bis 120 bara durchgeführt.

In einer Ausführungsform erfindungsgemäßen Verfahrens wird das Verfahren bei Temperaturen von 0 °C bis 200 °C bevorzugt 60-190 und besonders bevorzugt 80-180 °C durchgeführt

Ein weiterer Gegenstand der vorliegenden Erfindung sind Carbonylierungsprodukte durch Umsetzung von Epoxiden mit Kohlenstoffmonoxid nach dem erfindungsgemäßen Verfahren, wobei der molare Anteil an cyclischen Anhydriden bezogen auf das eingesetzte Epoxid weniger als 5 mol% beträgt, wobei der Anteil an cyclischen Anhydriden mittels der im Experimentalteil offenbarten ¹H-NMR Methode bestimmt wurde.

Hierbei sind unter Carbonylierungsprodukten Umsetzungsprodukte von Epoxiden mit Kohlenstoffmonoxid wie beispielsweise 4-Ring-Lactone, *beta*-Butyrolacton als Reaktionsprodukt von Propylenoxid und CO und Propiolacton als Reaktionsprodukt von Ethylenoxid und CO, als auch Polyhydroxyalkanoate als Polymerisationsprodukt von 4-Ring-Lactonen, insbesondere Polyhydroxybutyrat aus *beta*-Butyrolacton und Polyhydroxypropionat aus Propiolacton sowie deren Copolymere, die neben den genannten Polyester-Wiederholungseinheiten auch Polyether-Wiederholungeinheiten aufweisen, zu verstehen. Erfindungsgemäß sind unter Carbonylierungsprodukten auch Umsetzungsprodukte von Epoxiden mit Kohlenstoffmonoxid zu entsprechenden cyclischen Esterether-Verbindungen insbesondere Dioxepanon- und Dioxocanedion-Verbindungen insbesondere 1,4-Dioxepan-5-on, 2,7-Dimethyl-1,4-dioxepan-5-on, 2,6-Dimethyl-1,4-dioxepan-5-on, 3,6-Dimethyl-1,4-dioxepan-5-on, 3,7-Dimethyl-1,4-dioxepan-5-on, 1,5-Dioxocane-2,6-dion, 3,8-Dimethyl-1,5-dioxocane-2,6-dion, 3,7-Dimethyl-1,5-dioxocane-2,6-dion und 4,8-Dimethyl-1,5-dioxocane-2,6-dion.

Hierbei kann Polyhydroxybutyrat (kurz: PHB)- 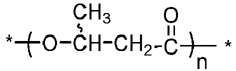 und/oder Polyhydroxypropionat (kurz: PHP) 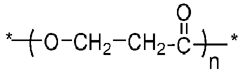 in Form von Co-Polymeren zusammen mit Polyether-Wiederholungseinheiten, 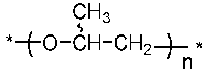 wie z.B. Polyether-Wiederholungseinheit gebildet aus PO und/oder 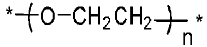 Polyether-Wiederholungseinheit gebildet aus EO, vorliegen (* = Endgruppen und/oder andere Wiederholungseinheiten).

Ein weiterer Gegenstand der vorliegenden Erfindung ist ein Verfahren zur Herstellung von Carbonylierungsfolgeprodukten, bevorzugt Polyurethanen, durch Umsetzung der erfindungsgemäßen Carbonylierungsprodukte mit Epoxiden, Polyisocyananten und/oder Polycarbonsäuren, bevorzugt mit Polyisocyanaten.

Auch die Verwendung der erfindungsgemäßen Vanadium-basierten, Chrom-basierten, Mangan-basierten und/oder Wolfram-basierten Verbindung bevorzugt Wolfram-basierten Verbindung enthaltenden Katalysatorsystems für die Carbonylierung von Epoxiden sind ein Gegenstand der vorliegenden Erfindung.

### Beispiele

### Verwendete Ausgangsstoffe:

Argon, kurz Ar, 99,998 %, Westfalen AG
Deuteriertes Chloroform, CDCl₃, 99,8 %, Eurisotop
Deuteriertes Tetrahydrofuran, THF-d₈, 99,5 %, Eurisotop
ARCOL^{®} POLYOL 1004, kurz: PET 1004, Covestro Deutschland AG
*beta*-Butyrolacton, kurz: bBL, 98 %, Sigma Aldrich Chemie GmbH
Toluol, trocken, 99,85 %, Acros Organics
Methanol, trocken, 99,8 %, Acros Organics
Trifluormethansulfonsäure, kurz: TfOH, 98 %, Alfa Aesar
Silicagel 60, kurz: SiO_{2,} Sigma Aldrich Chemie GmbH
3,5-Di-*tert*-butylsalicyladehyde, Sigma Aldrich Chemie GmbH
Chrom(II) chlorid, CrCl₂, trocken, 99,9 %, Strem Chemicals, Inc.
Tetrahydrofuran, kurz: THF, trocken, 99,5 %, Acros Organics
Celite^{®} 545, kurz: Celite, Acros Organics
*n*-Pentan, kurz: Pentan, trocken, 99 %, Acros Organics
Naphthalin, kurz: Nap, 99 %, Sigma Aldrich Chemie GmbH
Kohlenmonoxid, kurz: CO, 99,9 %, Paxair Deutschland GmbH
Propylenoxid, kurz: PO, 99,5 %, Sigma Aldrich Chemie GmbH
Dimethoxyethan, kurz: DME, trocken, 99,5 %, Acros Organics
Molsieb 3 Å, getrocknetes, Sigma Aldrich Chemie GmbH
Kaliumgraphit, KC8, Strem Chemicals Inc.
Wolframhexacarbonyl, W(CO)₆, 97%, Sigma Aldrich Chemie GmbH
Natriumhydroxid, NaOH, Honeywell
Dicobaltoctacarbonyl, Co₂(CO)₈, ≥90 % (1-10 % Hexan), Sigma Aldrich Chemie GmbH

Alle Flüssigkeiten wurden durch mehrfache Gefrier-Pump-Tau-Zyklen entgast und unter AR-Schutzgasatmosphäre gelagert. Feststoffe wurden unter Vakuum entgast und ebenfalls unter Ar-Schutzgasatmosphäre gelagert. Propylenoxid wurde durch mehrfache Gefrier-Pump-Tau-Zyklen entgast und unter Ar-Schutzgasatmosphäre und über 3 Å Molsieb bei 0 °C gelagert. Naphthalin wurde sublimiert und unter Vakuum in einer Glovebox gelagert.

### IR-Analytik:

Alle IR-Messungen wurden auf einem Bruker Alpha-PFT-IR Spektrometer durchgeführt. Falls nötig wurden die Messungen unter Ar-Schutzgas durchgeführt. Für alle gemessenen Spektren wurde eine automatische Basislinienkorrektur vorgenommen. Für weitere Details zur IR-Analytik der Produktgemische siehe unten "Quantitative IR-Analytik".

### NMR-Analytik:

NMR-Spektren wurden auf einem Bruker AV400 oder AV300 Spektrometer bei Raumtemperatur aufgenommen. 1H-NMRs wurden bei 400 bzw. 300 MHz gemessen, 13C-NMRs dementsprechend bei 100 bzw. 75 MHz. Die 1H- und 13C-NMR Signale sind gegen CHCl3 bzw. TMS referenziert.

### Quantitative IR-Analytik:

Zur Kalibrierung der quantitativen IR wurden Gemisch aus Polyhydroxybutyrat und Polyether mit 0-25 wt.-% Polyhydroxybutyrat-Anteil angefertigt und vermessen. Die Kalibrierungsgerade ergibt sich aus der Auftragung der relativen Absorbanz gegen den relativen Gewichtsanteil an Polyhydroxybutyrat. Die relativen Absorbanz wird aus dem Verhältnis der Absorbanz der C=O Bande zu dem der C-O Bande bestimmt. Der relative Massenanteil (in wt.-%) an Polyhydroxybutyrat- zu Polyether-Wiederholungseinheiten - in nicht flüchtigen Reaktionsrückständen (vgl. Allgemeine Versuchsvorschrift) - wurde somit wie folgt berechnen: w(Polyhydroxybutyrat) = relativen Absorbanz/0,0145. Analog wurde für Polyhydroxypropionat vorgegangen. Der relative Massenanteil (in wt.-%) an Polyhydroxypropionat- zu Polyether-Wiederholungseinheiten - in nicht flüchtigen Reaktionsrückständen (vgl. Allgemeine Versuchsvorschrift) - wurde somit wie folgt berechnen: w(Polyhydroxypropionat) = relativen Absorbanz/0,053.

### Polyether (kurz PET 1004) als Refrenzpolymer:

Als Polyether-Refrenzpolymer für die quantitative IR und NMR-Analytik wurde ARCOL^{®} POLYOL 1004 (kurz PET 1004) der Fa. Covestro verwendet. Es handelt sich dabei um ein bifunktionelles Polyetherpolyol auf Basis von PO mit einem mittleren MW von ca. 435 g/mol.

IR: v = 1087 (C-O) cm⁻¹.
¹H NMR (CDCl₃, 7.26 ppm): 1.07-1.16 (m, CH₃), 3.14-3.92 (m, CH, CH₂);
¹³C NMR (CDCl₃, 77.16 ppm): 17.0-18.6, 65.7-67.3, 73.4-76.1 ppm

### Synthese von Polyhydroxybutyrat (kurz PHB):

Die Synthese von Polyhydroxybutyrat (kurz PHB) als Referenzpolymer für die quantitative IR und NMR-Analytik erfolgt in Anlehnung an Tetrahedron Asymmetry, 2003, 14, 3249-3252 bzw. Polym. Chem., 2014, 5, 161-168. Unter Ar-Schutzgasatmosphäre wurden 3,8 mL β-Butyrolacton und 40 mL Toluol in einen Schlenkkolben vorgelegt, mit je 0,07 mL Methanol und Trifluormethansulfonsäure versetzt und anschließend bei 30 °C für 2 h gerührt. Anschließend wurde mit 0,15 mL Diisopropylethylamin gequencht, am Rotationsverdampfer eingeengt, säulenchromatographisch aufgereinigt (stationäre Phase: SiO_{2,} Laufmittel: DCM/MeOH 20:1 v/v) und von Lösungsmittel befreit. Das Referenzpolymer PHB wurde final am Hochvakuum getrocknet und mittels IR und NMR analysiert.

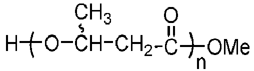

IR: v = 1731 (C=O) cm⁻¹.
¹H NMR (CDCl₃, 7.26 ppm): 5.25 (s, CH), 3.67 (s, OCH₃) 2.4-2.63 (d, CH₂), 1.25-1.28 (d, CH₃) ppm.
¹³C NMR (CDCl₃, 77.16 ppm): 20.0 (CH₃), 41.0 (CH₂), 67.8 (CH), 169.4 (C=O) ppm.

### Synthese des Salphen-Komplex Salz A:

Die Synthese des Salphen-Komplexes Salz A erfolgte nach Jiang et al. in Top. Catal., 2017, 60, 750-754 und eine isolierter Ausbeute von 77 % wurde erhalten.

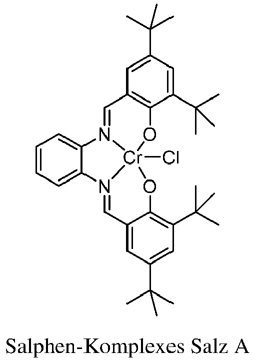

### Synthese von Katalysator-System 1 der Formel (VII):

Zu der festen Mischung aus W(CO)₆ (0,26 g, 0,75 mmol) und Salphen-Komplexes Salz A (0,47 g, 0,75 mmol) in einem Schlenkkolben wurde unter Ar-Atmosphäre THF (20 ml) zugegeben. Das Reaktionsgemisch wurde 64 h unter Rückfluss erhitzt. Anschließend wurde der Kolben auf RT abgekühlt. Das gewonnene Reaktionsgemisch wurde mithilfe eine Glasfaserfilterkanülen transferiert, um unlösliche Materialien zu entfernen. Anschließend wurde das Lösungsmittel im Vakuum entfernt, mit Hexan gewaschen (2 x 15 mL) und anschließend im Vakuum getrocknet. Man erhielt Katalysator-System 1 (0,43 g, 0,40 mmol, 53 %). FT-IR (ATR unter Luftatmosphäre):2041, 1929, 1867 (C=O) cm⁻¹

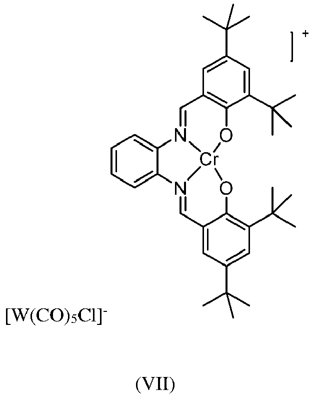

### Synthese von Katalysator-System 2 der Formel (VIII):

Die Synthese von Katalysator-System 2 erfolgte in Anlehnung an die Literatur. Dabei wurde eine Mischung aus W(CO)₆ und 2,2'-Bipyridin in Toluol refluxiert. Das feste Produkt (0,2 g, 0,44 mmol) und KC8 (0,08 g, 0,59 mmol) wurden in einem Schlenkkolben unter Ar-Atmosphäre bei -40 °C in THF (150 mL) zur Reaktion gebracht. Das resultierende Reaktionsgemisch wurde auf RT erwärmt und 1 h gerührt. Dann wurde Salphen-Komplexes Salz A (0,28 g, 0,44 mmol) bei RT zugegeben und 17 h weitergerührt. Nach der Umsetzung wurde das Lösungsmittel entfernt, mit Pentan gewaschen und mit THF extrahiert. Die Lösung wurde durch Celite filtriert. Anschließend wurde das Lösungsmittel im Vakuum entfernt, woraus Katalysator-System 2 als rotbrauner Feststoff (0,28 g, 0,24 mmol, 54 %) resultierte. FT-IR (ATR unter Ar-Atmosphäre): 2003, 1861, 1805 (C=O) cm⁻¹

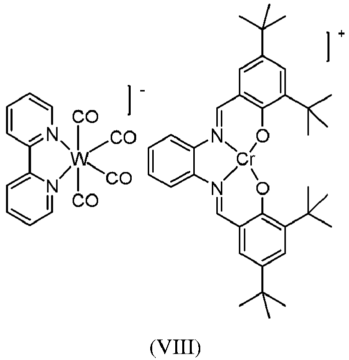

### Synthese von Katalysator-System 3 der Formel (XV)(Vergleich):

Die Synthese des Katalysator-Systems 3 erfolgte nach Kramer et al. in Org. Lett., 2006, 8, 3709-3712 und eine isolierter Ausbeute von 68 % wurde erhalten.

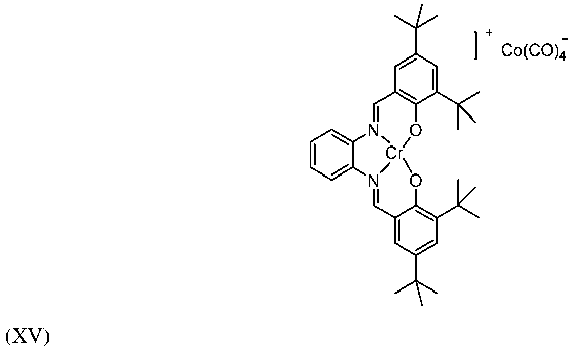

### Allgemeine Versuchsvorschrift:

Katalysator-System, Suspensionsmittel, Naphthalin als interner Standard und Epoxid wurden unter Ar-Schutzgasgegenstrom in ein Schlenkrohr eingewogen und gerührt. Das Gesamtvolumen des Gemischs betrug 2-5 mL. Dieses Gemisch wurde nun vollständig unter einem leichten CO-Gasgegenstrom in einen 10 mL-Druckreaktor überführt. Der gewünschte CO-Vordruck wurde unter Rühren eingestellt, auf Reaktionstemperatur aufgeheizt und der Anfangsdruck bei Reaktionstemperatur bestimmt. Am Ende der Reaktionszeit wurde der Enddruck bei Reaktionstemperatur bestimmt und der Druckreaktor anschließend mit Hilfe eines Wasser/Eis-Gemischs abgekühlt. Der verbleibende Restdruck wurde langsam abgelassen und unverzüglich eine Probe des Reaktionsgemischs zur Analyse entnommen. Ein Teil der Probe wurde nach Filtration über eine Kurzwegsäule mit Celite als stationäre Phase mittels NMR und GC analysiert. Ein anderer Teil der Probe wurde unter Vakuum von flüchtigen Bestandteilen befreit und mittels quantitativer IR und NMR analysiert. Die Polymerausbeute wurde gravimetrisch unter Berücksichtigung des zurückbleibenden Katalysators bestimmt. Die flüchtigen Bestandteile wurden dabei mit Hilfe einer Kühlfalle aufgefangen, Naphthalin als externer Standard zugegeben und das Gemisch ebenfalls analysiert.

### Beispiel 1: Carbonylierung von Propylenoxid unter Einsatz von Katalysator-System 1

Der Versuch wurde wie in der allgemeinen Versuchsvorschrift beschrieben durchgeführt. 1 mol% des Katalysator-Systems 1, DME als Suspensionsmittel, Naphthalin als interner Standard (0,009 mmol) und PO (0,924 mmol, 0,9 M) wurden eingesetzt. Die Reaktion wurde bei 150 °C, 80 bar Anfangsdruck und 19 h Reaktionszeit durchgeführt. Ein PO-Umsatz von 95 % wurde mittels NMR im Reaktionsgemisch bestimmt. Die nichtflüchtigen Bestandteile des Reaktionsgemisches wurden isoliert und analysiert. Es wurden ein Gehalt an 5,5 wt.-% PHB im polymeren Produkt bestimmt.

### Beispiel 2: Carbonylierung von Propylenoxid unter Einsatz von Katalysator-System 2

Der Versuch wurde wie in der allgemeinen Versuchsvorschrift beschrieben durchgeführt. 1 mol% des Katalysator-Systems 2, THF als Suspensionsmittel, Naphthalin als interner Standard (0,009 mmol) und PO (0,924 mmol, 0,9 M) wurden eingesetzt. Die Reaktion wurde bei 150 °C, 112 bar Anfangsdruck und 24 h Reaktionszeit durchgeführt. Ein PO-Umsatz von 64 % wurde mittels NMR im Reaktionsgemisch bestimmt. Die nichtflüchtigen Bestandteile des Reaktionsgemisches wurden isoliert und analysiert. Es wurde eine Polymerausbeute von 24 % mit einem Anteil an 33,3 wt.-% PHB im polymeren Produkt bestimmt.

### Beispiel 3 (Vergleich): Carbonylierung von Propylenoxid unter Einsatz von Katalysator-System 3

Der Versuch wurde wie in der allgemeinen Versuchsvorschrift beschrieben durchgeführt. 1 mol% des Katalysator-Systems 3, THF, Naphthalin als interner Standard (0,2 mmol) und PO (2 mmol, 0,9 M) wurden eingesetzt. Die Reaktion wurde bei 120 °C, 82 bar Anfangsdruck und 15 h Reaktionszeit durchgeführt. Ein PO-Umsatz von 100 %, die Bildung von 77 % Methylbernsteinsäureanhydrid und 2 % Aceton konnte mittels NMR im Reaktionsgemisch nachgewiesen werden. Es konnten lediglich Spuren von Polymer und kein PHB nachgewiesen werden.

Die Charakterisierung und Quantifizierung von Methylbernsteinsäureanhydrid erfolgt anhand der spezifischen ¹H-NMR-Signale und deren Integralen im Verhältnis zum eingesetzten PO/internen Standard:
¹H NMR (CDCl₃, 7.26 ppm): 1.42 (d, CH₃), 2.57-2.67 (m, CH), 3.11-3.23 (m, CH₂) ;
¹³C NMR (CDCl₃, 77.16 ppm): 16.1, 35.7, 36.1, 170.1, 174.6

## Patentansprüche

1. Verfahren zur Carbonylierung von Epoxiden in Gegenwart von Katalysator-Systemen, wobei die Carbonylierung in Gegenwart von Kohlenmonoxid erfolgt, **dadurch gekennzeichnet, dass** das Katalysatorsystem eine Vanadium-basierte, Chrom-basierte, Mangan-basierte und/oder Wolfram-basierte Verbindung bevorzugt Wolfram-basierte Verbindung enthält.

2. Verfahren gemäß Anspruch 1, wobei die Vanadium-basierte, Chrom-basierte, Mangan-basierte und/oder Wolfram-basierte Verbindung bevorzugt Wolfram-basierte Verbindung ein oder mehrere Carbonyl-Liganden bevorzugt ein bis sechs Carbonyl-Liganden, besonders bevorzugt zwei bis fünf Carbonyl-Liganden enthält.

3. Verfahren gemäß Anspruch 1 oder 2, wobei die Vanadium-basierte, Chrom-basierte, Mangan-basierte und/oder Wolfram-basierte Verbindung bevorzugt Wolfram-basierte Verbindung einen weiteren Liganden (L) ungleich des Carbonyl-Liganden aufweist.

4. Verfahren gemäß Anspruch 3, wobei der Ligand (L) eine oder mehrere Verbindung(en) ist und ausgewählt wird aus der Gruppe bestehend aus H, F, Cl, Br, I, CN, NC, SCN, N₃, NO₂, NO₃, NH₂, OTf, OAc, OH, HSO₄, η³-C₃H₅, Butadiene (C₄C₆), Cyclopentadienyl (Cp, η⁵-C₅H₅), Pentamethylcyclopentadienyl (Cp*, η⁵-C₅Me₅), C(Ph)(Ph) (als Fischer-Carben), C(OMe)(Ph) (als Fischer-Carben), C(OEt)(NHPh) (als Fischer-Carben), 1,3-Dimesitylimidazol-2-ylidene (IMes, NHC-Carben), 1,3-Bis(2,4,6-trimethylphenyl)-4,5-dihydroimidazol-2-ylidene (SIMes, NHC-Carben), NH₃, Ethylendiamin (eda), Diethylentriamin, Tetramethylethylendiamin, Anilin, Pyridin, 2,2'-Bipyridin (bipy), PPh₃, PMe₃, PEt₃, PBu₃, PH₃, P(OMe)₃, P(OEt)₃, Diethylether, THF und 2-Me-THF, bevorzugt H, F, Cl, Br, I, CN, NC, SCN, N₃, NO₂, NO₃, NH₂, OTf, OAc, η³-C₃H₅, Butadiene (C₄C₆), Cyclopentadienyl (Cp, η⁵-C₅H₅), Pentamethylcyclopentadienyl (Cp^{∗}, η⁵-C₅Me₅), C(Ph)(Ph) (als Fischer-Carben), C(OMe)(Ph) (als Fischer-Carben), C(OEt)(NHPh) (als Fischer-Carben), 1,3-Dimesitylimidazol-2-ylidene (IMes, NHC-Carben), 1,3-Bis(2,4,6-trimethylphenyl)-4,5-dihydroimidazol-2-ylidene (SIMes, NHC-Carben), Ethylendiamin (eda), Diethylentriamin, Tetramethylethylendiamin, Anilin, Pyridin, 2,2'-Bipyridin (bipy), PPh₃ und PMe₃, besonders bevorzugt H, F, Cl, Br, I, CN, NC, SCN, N₃, OTf, Cyclopentadienyl (Cp, η⁵-C₅H₅), Pentamethylcyclopentadienyl (Cp*, η⁵-C₅Me₅), C(Ph)(Ph) (als Fischer-Carben), C(OMe)(Ph) (als Fischer-Carben), C(OEt)(NHPh) (als Fischer-Carben), 1,3-Dimesitylimidazol-2-ylidene (IMes, NHC-Carben) und 1,3-Bis(2,4,6-trimethylphenyl)-4,5-dihydroimidazol-2-ylidene (SIMes, NHC-Carben), ganz besonders bevorzugt Cl, Br, I, Ethylendiamin (eda), 2,2'-Bipyridin (bipy), Cyclopentadienyl (Cp, η⁵-C₅H₅) und Pentamethylcyclopentadienyl (Cp*, η⁵-C₅Me₅).

5. Verfahren gemäß einem der Ansprüche 1 bis 4 wobei das Katalysator-System eine zusätzliche Lewis Säure enthält.

6. Verfahren gemäß Anspruch 5, wobei die Lewis-Säure kationisch oder ladungsneutral, bevorzugt kationisch ist.

7. Verfahren gemäß Anspruch 6, wobei die Lewis-Säure kationisch ist

8. Verfahren gemäß Anspruch 7, wobei die kationische Lewis-Säure ein unsubstituiertes Dicyclopentadienyl-Metall-Kation, ein substituiertes Dicyclopentadienyl-Metall-Kation, ein unsubstituiertes Metall-Porphyrin-Kation, ein substituiertes Metall-Porphyrin-Kation, ein unsubstituiertes Metall-Salen-Kation, ein substituiertes Metall-Salen-Kation, ein unsubstituiertes Metall-Salphen-Kation und/oder ein und substituiertes Metall-Salphen-Kation ist.

9. Verfahren gemäß einem der Ansprüche 1 bis 8, wobei die Vanadium-basierte, Chrom-basierte, Mangan-basierte und/oder Wolfram-basierte Verbindung bevorzugt Wolfram-basierte Verbindung anionisch ist.

10. Verfahren gemäß einem der Ansprüche 1 bis 9, wobei das Katalysatorsystem die Struktur (I), (II), (III), (IV), (V) und/oder (VI) aufweist: 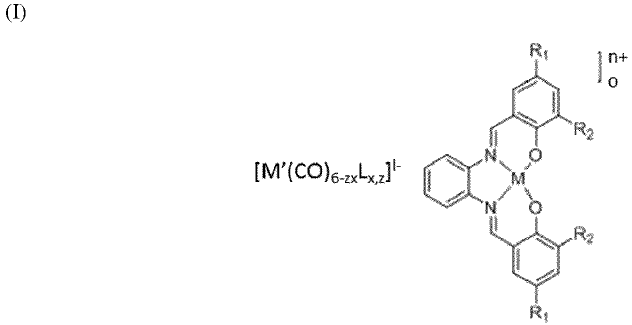
mit L = H, F, Cl, Br, I, CN, NC, SCN, NCS, CP, N₃, NO₂, NO₃, NH₂, OTf, OH, HSO₄, eda oder bipy bevorzugt H, F, Cl, Br, I, CN, N₃, OTf, eda oder bipy ganz besonders bevorzugt Cl, Br, eda oder bipy;
mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R₁ und R₂ unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt R₁ gleich R₂ ausgewählt aus der Gruppe von Wasserstoff (-H), Methyl oder tert. Butyl, ganz besonders bevorzugt tert. Butyl; 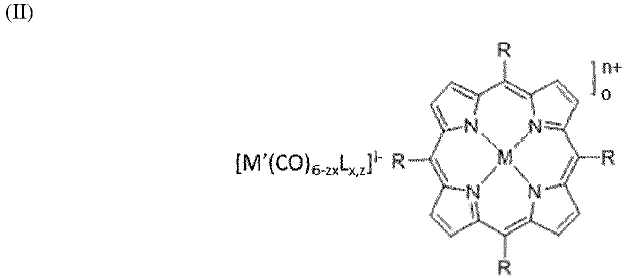
mit L = H, F, Cl, Br, I, CN, NC, SCN, NCS, CP, N₃, NO₂, NO₃, NH₂, OTf, OH, HSO₄, eda oder bipy bevorzugt H, F, Cl, Br, I, CN, N₃, OTf, eda oder bipy ganz besonders bevorzugt Cl, Br, eda oder bipy;
mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R ausgewählt aus der Gruppe von Wasserstoff (-H), Methyl, tert. Butyl, Methoxy, Phenyl, 4-Methylphenyl, 4-Methoxyphenyl, 4-Chlorphenyl, 4-Bromphenyl, 4-Carboxylphenyl, 3,5-Dimethoxyphenyl, 2-Pyridyl, 4-Pyridyl und N-Methyl-4-pyridyl, bevorzugt tert. Butyl, Methoxy, Phenyl, 4-Methylphenyl, 4-Methoxyphenyl, 4-Chlorphenyl oder 3,5-Dimethoxyphenyl, ganz besonders bevorzugt Phenyl. 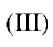 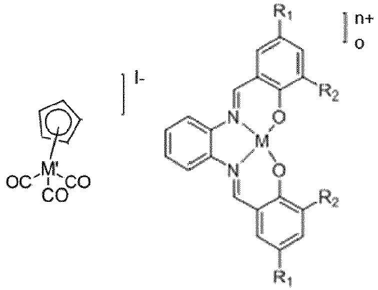
mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R₁ und R₂ unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt R₁ gleich R₂ ausgewählt aus der Gruppe von Wasserstoff (-H), Methyl oder tert. Butyl, ganz besonders bevorzugt tert. Butyl; 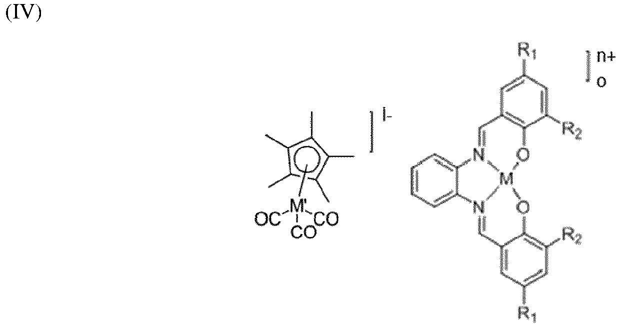
mit M = Cr(III), Al(III), Fe(III), Co(III), Mn(III), V(III), In(III), Ga(III), Y(III), Ru(III), La(III), Ce(III), Gd(III) oder Ir(III), bevorzugt Cr(III), Al(III), Fe(III), Co(III), Mn(III), oder Ga(III), ganz besonders bevorzugt Cr(III) oder Al(III);
mit M' = V, Cr, Mn oder W bevorzugt W;
mit R₁ und R₂ unabhängig voneinander ausgewählt aus der Gruppe von Wasserstoff (-H), Methyl, tert. Butyl, Phenyl, Nitro, Brom, Chlor, Hydroxy, Diethylamino und Methoxy bevorzugt R₁ gleich R₂ ausgewählt aus der Gruppe von Wasserstoff (-H), Methyl oder tert. Butyl, ganz besonders bevorzugt tert. Butyl; 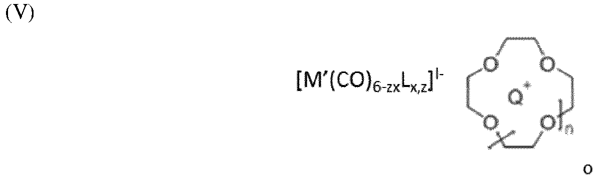
mit L = H, F, Cl, Br, I, CN, NC, SCN, NCS, CP, N₃, NO₂, NO₃, NH₂, OTf, OH, HSO₄, eda oder bipy bevorzugt H, F, Cl, Br, I, CN, N₃, OTf, eda oder bipy ganz besonders bevorzugt Cl, Br, eda oder bipy;
mit Q = Li, Na, K, Rb, Cs, Cu oder Ag, bevorzugt Li, Na, K oder Rb, ganz besonders bevorzugt K;
mit M' = V, Cr, Mn oder W bevorzugt W;
mit n = 1-5, bevorzugt 2-5, ganz besonders bevorzugt 3;
und/oder 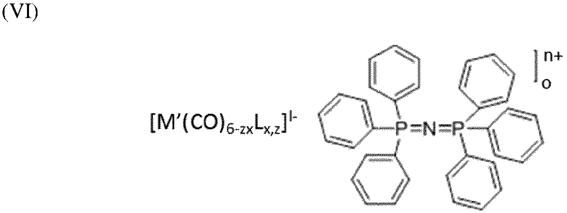
mit L = H, F, Cl, Br, I, CN, NC, SCN, NCS, CP, N₃, NO₂, NO₃, NH₂, OTf, OH, HSO₄, eda oder bipy bevorzugt H, F, Cl, Br, I, CN, N₃, OTf, eda oder bipy ganz besonders bevorzugt Cl, Br, eda oder bipy;
mit M' = V, Cr, Mn oder W bevorzugt W.

11. Verfahren gemäß einem der Ansprüche 1 bis 10, wobei das Katalysatorsystem die Struktur (VII), (VIII), (IX), (X), (XI), (XII), (XIII) und/oder (XIV) aufweist:

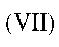

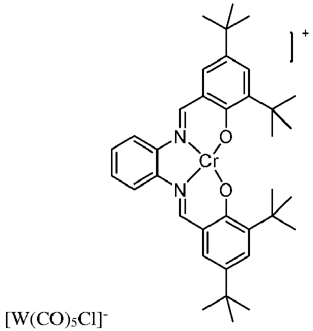

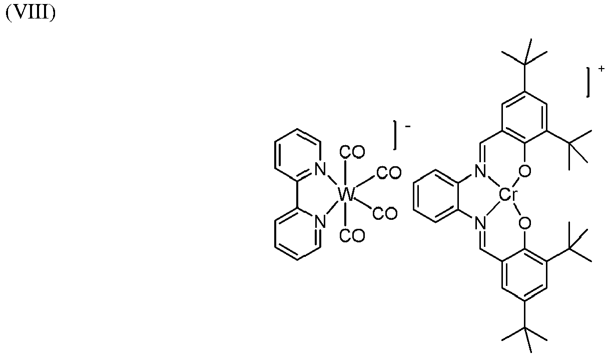

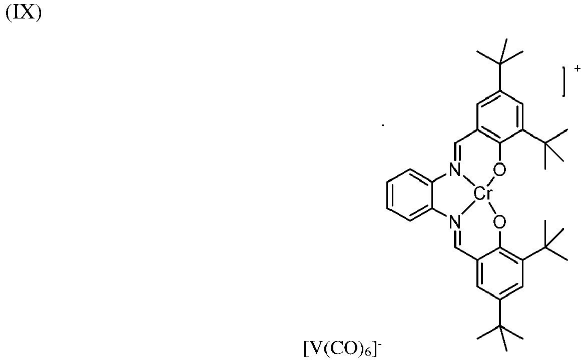

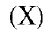

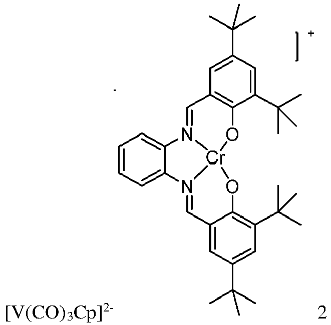

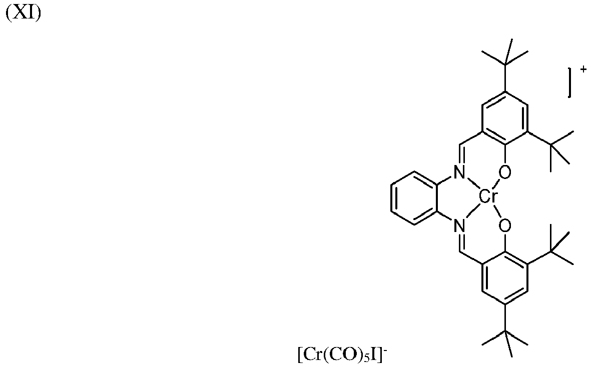

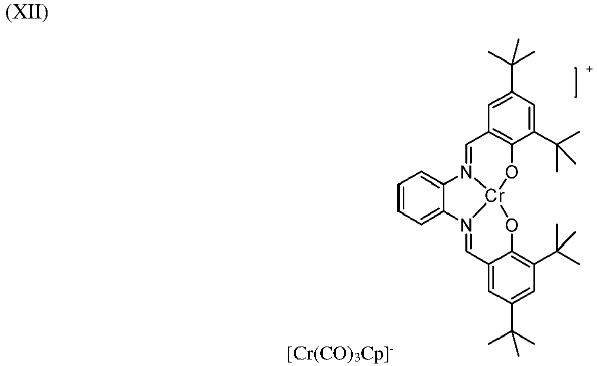

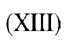

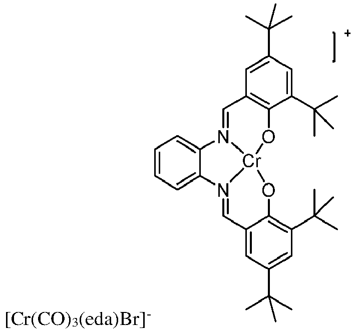

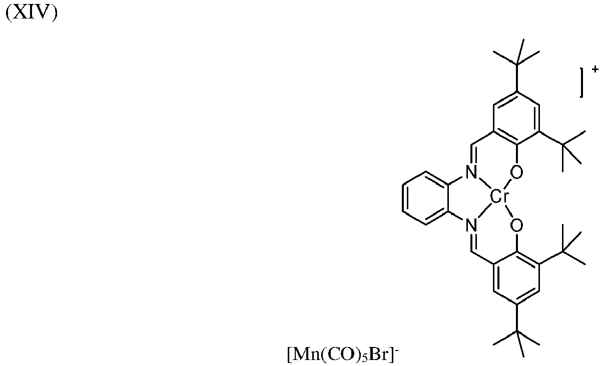

12. Verfahren gemäß einem der Ansprüche 1 bis 11, wobei das Katalysatorsystem die Struktur (VII) und/oder (VIII) aufweist.

13. Carbonylierungsprodukte erhältlich nach mindestens einem der Ansprüche 1 bis 12, wobei der molare Anteil an cyclischen Anhydriden bezogen auf das eingesetzte Epoxid weniger als 5 mol% beträgt, wobei der Anteil an cyclischen mittels der im Experimentalteil offenbarten ¹H-NMR Methode bestimmt wurde.

14. Verfahren zur Herstellung von Carbonylierungsfolgeprodukten, bevorzugt Polyurethanen, durch Umsetzung der Carbonylierungsprodukte gemäß Anspruch 13 mit Epoxiden, Polyisocyananten und/oder Polycarbonsäuren, bevorzugt mit Polyisocyanaten.

15. Verwendung des Katalysator-Systems enthaltend der Chrom-basierten, Mangan-basierten und/oder Wolfram-basierten Verbindung bevorzugt Wolfram-basierten Verbindung gemäß einem der Ansprüche 1 bis 12 zur Carbonylierung von Epoxiden.
